# EUROPEAN PATENT SPECIFICATION

(11) **EP 1 855 134 B1**
(45) Date of publication and mention of the grant of the patent: **26.10.2016**
(21) Application number: 07009425.5
(22) Date of filing: 10.05.2007
(51) Int. Cl.: G02B 6/44, G02B 6/38

(54) **A cable assembly as well as a method for installing such a cable assembly**
Kabelanordnung und Verfahren zur Installation einer solchen Kabelanordnung
Ensemble de câble ainsi qu'un procédé pour installer un tel ensemble de câble

(30) Priority: 11.05.2006 NL 1031792
(43) Date of publication of application: 14.11.2007
(73) Proprietor: Draka Comteq B.V., 1083 HJ Amsterdam (NL)
(72) Inventor: Griffioen, Willem, 2461 XJ TER AAR (NL); Lock, Pieter, 2553 NC 'S-Gravenhage (NL)
(74) Representative: Algemeen Octrooi- en Merkenbureau B.V.

(56) References cited:
- DE-A1-102004 019 805
- DE-U1- 9 409 660
- GB-A- 2 289 805
- US-A- 4 684 161
- US-A- 4 684 211
- US-A- 5 480 203
- US-A- 6 100 470
- US-A1- 2001 033 730
- US-A1- 2005 053 342
- US-B1- 6 396 993

## Description

The invention concerns a method for installing a cable assembly according to claims 1-4 and a device for collecting the front end of a cable assembly according to claims 5-8.

Document US 2001/033 730-A1 discloses a fiber optic cable connector device capable of coupling fiber optic cables for use in installing a fiber optic cable network including a cap member having an for receiving and securing a fiber optic cable end portion, a sleeve member having a retaining device to receive, engage and secure the cap member containing a fiber optic cable end portion, and a coupling member having a retaining device to receive, engage and secure the assembled fiber optic cable end portion, sleeve and cap members. An adapter, having fiber conduit slidably mounted within a support member housing, provides an interface for coupling multiple single-fiber carrying fiber optic cables and dual fiber carrying fiber optic cables. A method of terminating fiber optic ends with little or no polishing incorporates viewing the illuminated fiber end-face through a microscope.

Document GB 2 289 805-A discloses a method of providing a building or other location with an optical fibre element. The method comprises introducing a leading end of the optical fibre element into the bore of a previously installed duct and propelling it along the duct by fluid drag of a gaseous medium, e.g. air. The element is terminated with an optical connector at its leading end before it is introduced into the duct so that the element and connector are propelled along the duct together.

The invention relates to a cable assembly for communication purposes, comprising
- a communication cable having a first free end, which cable can be passed through a cable guide from a starting position to an end position with its front end, and
- a communication connector,
wherein the cable is built up of at least an optical fibre, which is coaxially surrounded by at least one cable sheath, within which at least one strain relieving element is present, and wherein the communication connector can be mounted to the first end of the communication cable in communicative contact with the optical fibre.

When optical fibre networks are installed, the network comprises several connections for connecting the various end users. Various techniques are used for connecting the optical fibre from the main network to the end user's house.

One such technique is leading the communication cable through to the end user's location, after which a so-called communication connector is fitted to the free end in situ. This is not an advisable technique, since it is necessary to expose the optical fibre by removing the cable sheath, to mount the exposed optical fibre end in the connector and to polish the end face of the optical fibre so as to enable a good signal transmission.

The cable assembly consists of a communication cable provided with a communication connector, passed through the cable guide to the end position as a pre-prepared assembly. The connector, on the other hand, which is likewise passed through the cable guide, has considerable diameter dimensions in comparison with the communication cable, making it necessary to install comparatively wide cable guides in the ground. In addition to that it is difficult to pass such a cable assembly, with a complete connector mounted to the free front end of the communication cable, through the cable guide. More specifically, said cable assembly must be passed through the cable guide from the end position to its end position. This makes it necessary carry out operations at the end position at the end user's location, which is undesirable in view of the extent of planning and the man-hours involved. It is the object of the invention to obviate the above drawbacks of the existing installation techniques and to provide a cable assembly that does not have these drawbacks. More specifically it is an object of the invention to provide a cable assembly as mentioned in the introduction which makes it possible to lead individual cable assemblies from a central point to the various end users, where the connector can be mounted by means of a simple mounting operation.

According to the invention, the cable assembly is to that end characterised in that in order to make it possible to pass the communication cable through the cable guide, the optical fibre is exposed at the free, front end of the cable, which end is fixedly surrounded by a connecting element, which can be mechanically assembled to form a communication connector after the communication cable has been passed through the cable guide.

Thus, the communication connector can be connected in communicative contact to the optical fibre by means of a simple mechanical operation after the cable assembly has been led to the end position, whilst on the other hand no complex and costly finishing operations, such as polishing, need to be carried out at the end user's location.

According to a further aspect of the invention, the cable assembly is to that end characterised in that a spring element may be provided round the optical fibre between the connecting element and the cable sheath(s). Said spring element may be retained by the connecting element and a retaining sleeve arranged around the optical fibre. In this way any loads exerted on the end faces of an optical fibre end and the connecting element can be absorbed by the compression of the spring element, thus preventing damage to the connecting element and/or the optical fibre.

The connecting element may be provided with at least one recess in its circumferential surface, which recess may be configured as a circular recess formed in the circumferential surface in a special embodiment.

In order to make it easier to pass the cable assembly through the cable guide, the connecting element and the spring element may be protected by a removable protective element to be provided round the free end of the communication cable.

According to the invention, the communication connector may comprise at least one sleeve to be provided around the connecting element for use in the final assembly of the cable assembly.

To facilitate the final assembly at the end position, said sleeve may be made up of two or more sleeve elements to be provided around the connecting element.

More specifically, in a specific embodiment the sleeve may be provided with spaced-apart first and second cams extending towards the connecting element, with the first cam engaging in the recess formed in the connecting element and the second cam engaging the spring element.

On the one hand a good mechanical connection of the connecting element to the sleeve or sleeve elements is obtained in this way, whilst on the other hand any compression of the connecting element as a result of a force being exerted on the end face thereof can be absorbed by the compression of the spring element.

More specifically, the second cam mates with a cam present on the retaining sleeve.

In order to absorb any forces being exerted on the end face of the connecting element through compression of the spring element and movement of the sleeve along therewith, as already explained in the foregoing, the length dimension of the recess is according to the invention larger than the length dimension of the first cam, seen in the longitudinal direction of the cable.

The communication connector comprises a connector housing to be provided round the sleeve to facilitate further assembly operations.

In order to realise a proper retainment and prevent the connector housing from undesirably becoming detached from the sleeve, the connector housing comprises a cam extending towards the sleeve, which cam engages in a recess formed in the outer circumference of the sleeve.

Preferably the maximum diameter of the cable assembly provided with the connecting element lies between 60%-95% of the inner diameter of the cable guide and more in particular the maximum diameter of the cable assembly provided with the connecting element lies between 70%-85% of the inner diameter of the cable guide.

In a further preferred embodiment the maximum diameter of the cable assembly provided with the connecting element is less than 200% the diameter of the communication cable or less than 150% the diameter of the communication cable or less than 120% the diameter of the communication cable.

However it is preferred that the maximum diameter of the cable assembly provided with the connecting element is less than the diameter of the communication cable.

Furthermore in yet another embodiments the length of the connecting element is less than 10 times its maximum diameter or less than 8 times its maximum diameter or less than 6 times its maximum diameter.

With the above constructional dimensions a proper and unhampered displacement of the cable assembly through the cable guide is possible even passing sharp bends in the cable guide.

The invention also relates to a device for collecting the front end of a cable assembly for communication purposes, which cable assembly comprises a communication cable having a first free end and which cable is be passed through a cable guide from a starting position to an end position with its front end. According to the invention said device comprises an enclosure to be positioned around said end position of said cable guide, said enclosure being provided with one or more ventilation openings.

This allows a versatile collection of the front end of the cable assembly when being guided through the cable guide with the aid of a transfer medium, such as air or liquid,

More in particular said enclosure is configured as a tube-shaped element having a first and a second open end, wherein said first open end is provided with connecting means for coupling with the end position of said cable guide. This allows a quick and secure coupling and uncoupling of the device to the cable guide at the premises of the end user, where the cable assembly is to be installed.

In a further embodiment said second open end is provided with a closure cap, which functions as an end stop for the front end of the cable assembly upon leaving the cable guide.

In a further improved embodiment said device comprising a collecting chamber accommodating said enclosure, said collecting chamber serving for collecting transfer liquid used for passing said cable assembly through said cable guide.

According to the invention the method for installing a cable assembly for communication purposes, said cable assembly comprising a communication cable having a first free end and wherein the cable is built up of at least an optical fibre, which is coaxially surrounded by at least one cable sheath, comprises the steps of:
i) providing a cable guide having a starting point and an end point located at an end users home;
ii) guiding said cable assembly with the optical fibre being exposed at the free, front end of the cable, which end is fixedly surrounded by a connecting element from said starting point towards said end point using a transfer medium;
iii) collecting the free, front end of the cable assembly at the end point;
iv) final assembly of a communication connector (2) containing the free, front end of the cable assembly.

In a further improvement step iii) comprises further the step of
v) collecting the transfer fluid at the end point during the guiding of the cable assembly through the cable guide according to step ii).

The invention will now be explained in more detail with reference to a drawing, in which:
Figure 1 shows a first embodiment of a cable assembly according to the invention;
Figure 2 shows the cable assembly of figure 1 while being passed through a cable guide;
Figure 3 shows a first final assembly situation of the cable assembly in the end position;
Figure 4 shows a second final assembly situation of the cable assembly;
Figure 5 shows a third final assembly situation of the cable assembly; ,
Figures 6 shows another embodiment of a cable assembly according to the invention; and
Figures 7 shows yet another embodiment of a cable assembly according to the invention.

For a better understanding of the invention, like parts will be indicated by the same numerals in the following description of the figures of the appended drawings.

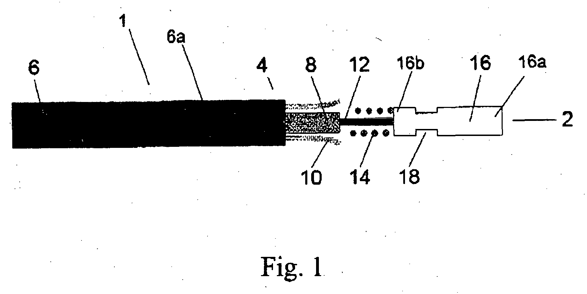

In figure 1, numeral 1 indicates a first embodiment of the cable assembly for communication purposes according to the invention. The cable assembly 1 is built up of a communication cable 6 having a front free end 4, which cable can be passed through a cable guide (not shown) to an end position with its front end 4.

The communication cable 6 is at least made up of an optical fibre 12, which is coaxially surrounded by at least one cable sheath 6a as well as a strain relieving sheath 10. In this embodiment a buffer sheath 8 is furthermore provided round the optical fibre 12.

To make it easier to pass the communication cable 6 through the cable guide (not shown), the optical cable 12 has been exposed at the free, front end 4 of the cable 6, which end is fixedly surrounded by a connecting element 16. The connecting element 16 has a front end face 16a and a back face 16b, which is in contact with the optical fibre 12. The front end face 16a is configured as a surface which is centrally provided with a polished glass fibre surface, which can be placed into communication with a similar polished surface of a counter connector (not shown).

The connecting element 16 is provided with at least one recess 18, which is configured as a circular recess formed in the circumferential surface. The function of said recess 18 will be explained in more detail further on in the description of the figures. As is also shown clearly in figure 1, a spring element 14 is arranged round the optical fibre 12 between the connecting element 16 and the cable sheaths 8-10-6a. In the fully assembled condition of the connector, the spring element 14 functions to press the polished glass fibre surfaces together with a sufficient force (not too much force, since mechanical stresses may lead to cracking of the glass material) upon connection with a counter connector so as to effect a physical contact with a minimal optical signal attenuation of the connector connection.

The connecting element 16 and the spring element 14 form part of a semi-finished communication connector 2.

According to the invention, the embodiment of the cable assembly that is shown in figure 1 is passed through a cable guide in the direction of an end position from a central distribution point. At the end position, final assembly of the semi-finished communication connector 2 takes place, so that the cable assembly 1 can be used for communication applications.

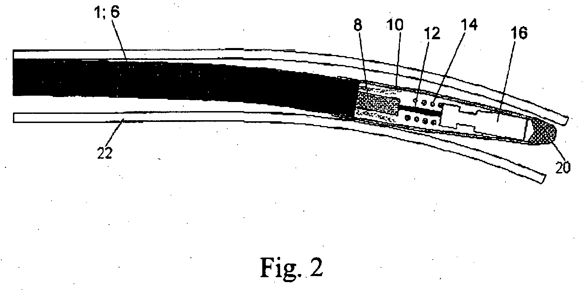

This embodiment is shown in figure 2, in which the cable assembly 1 is passed through an underground cable guide 22 (for example a cable conduit). To protect the components of the semi-finished communication connector 2, in this case the connecting element 16 and the spring element 14, a protective element 20 is used in passing the cable assembly through the cable guide 22, which protective element 20 protects the free end 4 of the cable assembly and more in particular the connecting element 16 and the spring element 14.

The protective element 20 is removable in this embodiment. Once the cable assembly 1 has been passed through the cable guide 22 to the end position (for example an end user's meter cupboard), the protective element 20 must be removed, whereupon the final assembly of the semi-finished communication connector 2 (made up of the connecting element 16 and the spring element 14 at this stage) is to take place.

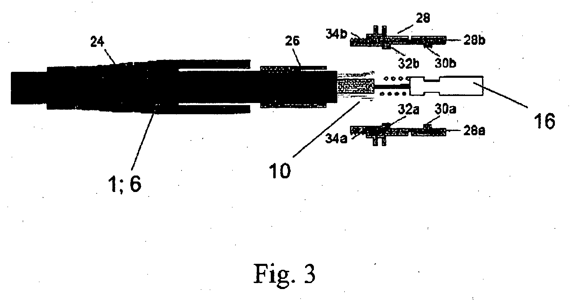

Upon final assembly and mounting of the complete communication connector 2, a kink protector 24 is first slipped over the cable assembly 1. Then a shrink sleeve 26 is fitted round the outer cable sheath 6, after which the connecting element 16 and the spring element 14 are protected by a connector housing. In this embodiment shown in figure 3, the connector sleeve 28 is built up of two sleeve elements 28a-28b, which can be fitted together and over the connecting element 16 and the spring element 14, respectively, by means of a clamped connection or a snap connection.

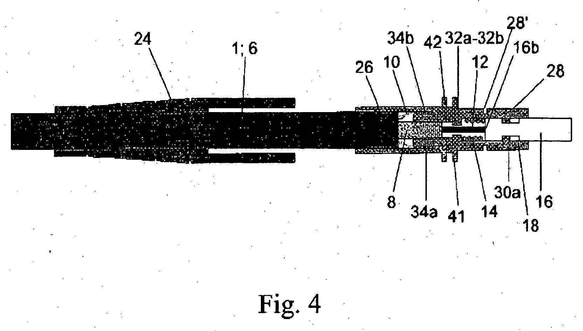

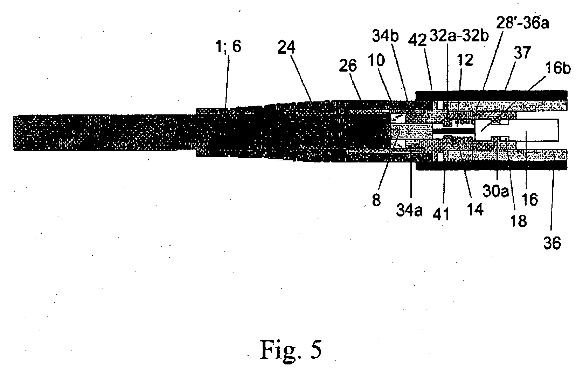

As figure 3 and also figure 4 clearly show, each housing element 28a-28b is provided with a first inwardly oriented cam 30a-30b, which, upon placement around the connecting element 16, extends into the recess 18 of the connecting element 16. As is clearly shown in figure 4 as well as in figure.5, the length dimension of the recess 18 is greater than the length dimension of the first cam 30a-30b, seen in the longitudinal direction of the cable 1.

Furthermore, the sleeve 28, and more in particular the two housing elements 28a- 28b, is (are each) provided with a second inwardly oriented cam 32a-32b spaced from the first inwardly oriented cam 30a-30b, which second cam 32a-32b engages the spring element. The spring element 14 is thus retained between the second cam 32a-32b and the end face 16b of the connecting element 16. This manner of retainment of the spring element 14, in conjunction with the larger dimension of the recess 18 in comparison with the first cam 30a-30b extending into said recess 18, enables a slight degree of compression of the connecting element as a result of the action of the spring element when longitudinal forces are exerted thereon. In this way the optical fibre 12 is not subjected to loads that may affect the fibre adversely.

As is clearly shown in Figure 4, the strain relieving sheath/element 10, which may for example be made of aramid fibres formed around the surfaces 34a-34b, is provided with a screw or a knurled edge or other friction-increasing surface. The strain relieving sheath 10 is thus clamped onto the surfaces 34a-34b of the two sleeve elements 28a-28b by the shrink sleeve 26. In this way a good strain relieving connection between the communication connector 2 and the outer sheath 6a is realised. The kink protector 24 can be slid in the direction of the communication connector 2, so that it protects the shrink sleeve 26 and comes to abut against a first upwardly oriented cam 42 provided on each housing element 28a-28b.

As is clearly shown in Figure 5, the free end of the connecting elements 16 projecting from the sleeve 28 is further protected by means of a protective sleeve 36, which is provided with an inwardly oriented cam 36a, which precisely fits in the circular recess 28' formed in the external surface of the sleeve 28. The protective sleeve 36 thus comes to abut against a further outwardly oriented cam 41, which forms part of each sleeve element 28a-28b. The final assembly of the communication connector 2 is completed by the provision of a connector envelope 37, which can be slid over the protective sleeve 36, the upright cams 41-42 and the kink protector 24.

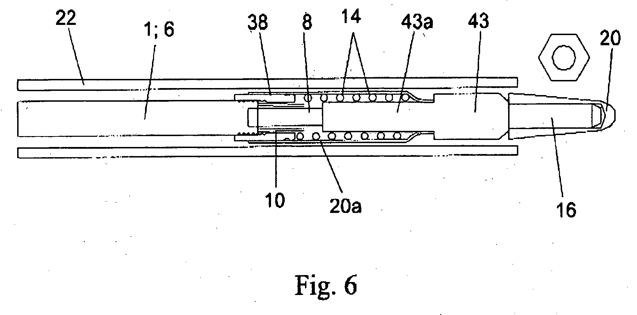

Figure 6 discloses yet another embodiment of a cable assembly 1, in which the spring element 14 is not arranged around the optical fibre 12, as in the embodiments that are shown in Figures 1-5, but around an element portion 43a of a coupling element 43 provided around the optical fibre 12 between the connecting element 16 and the cable sheath 6a. As is clearly shown in the cross-sectional view of figure 6, said intermediate element 43 has a hexagonal outer circumference, around which the sleeve elements 28a-28b (not shown) can be clamped. Because of this surface configuration, sliding or rotating movement is not possible, so that there is no need for a cam-recess configuration.

In the embodiment of Figure 6, too, the connecting element 16 is protected by a protective element 20, whilst the spring element 14 and the ring 38 are protected by a protective sleeve 20a. The ring 38 is disposed between the spring element 14 and the sheaths 6a, 8, 10 and is provided with internal screw thread for being fitted around the sheath 6a. The ring 38 functions to hold the protective sleeve 20a in place. This construction results in a cable assembly having a reduced external diameter which makes it easier to pass the assembly through a cable guide 22.

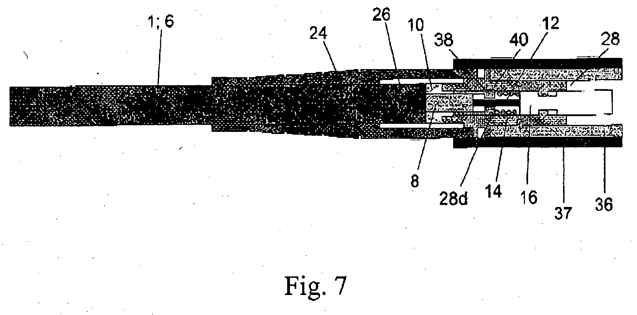

In another embodiment, the protective sleeve 20a and the protective element 20 may be configured as one unit, which may have a slightly larger external diameter, however. A ring 38 may be provided between the spring element 14 and the sheaths 6a, 8, 10. After the cable assembly 1 has been moved to the end position and the kink protector 24 and the shrink sleeve 26 have been provided, said ring 38 is pressed down in the connector sleeve 28 (which need not be divisible in this embodiment). As a result, the spring element 14 is biased. The ring 38 is provided with an upright, circular edge 14, which fits in a recess 28d formed in the inner circumference of the sleeve elements 28a-28b. This principle is shown in yet another embodiment in Figure 7.

Using the cable assembly according to the invention, a semi-finished communication connector can be passed through a cable guide together with the communication cable in an effective manner by exerting a pulling or pushing force, which force may or may not be provided by a gas medium under pressure. In this way no complex assembly operations need to be carried out at the end position.

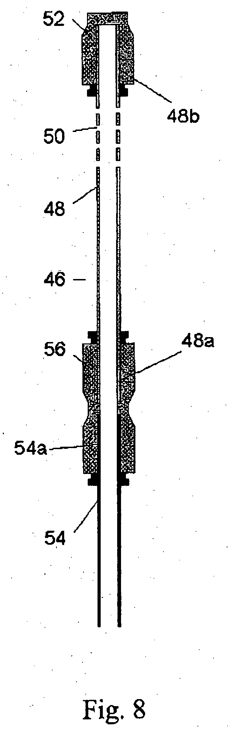

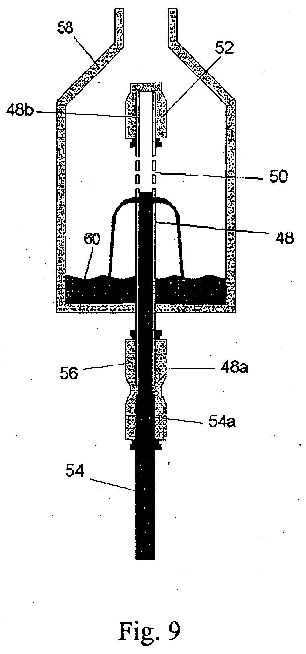

Figures 8 and 9 disclose a device (46) for collecting the front end of a cable assembly (1; 6) according to the invention. The cable assembly is passed through a cable guide (54), which ends or terminates for example at home of an end user. The cable assembly is passed through said cable guide (54) using a transfer medium, for example pressurized air or a liquid, from a starting position to an end position (54a), which is located inside the end user's home.

According to the invention said device (46) comprises an enclosure (48), which is to be positioned around the end position (54a) of the cable guide 54).

Moreover said enclosure (46) is provided with one or more ventilation openings (50) allowing the passage of said transfer medium (pressurized air or liquid) out of said enclosure when passing the cable assmbly through said cable guide (54).

Preferably said enclosure (46) is configured as a tube-shaped element (48) having a first (48a) and a second open end (48b), wherein said first open end (48a) is provided with connecting means (56) for coupling with the end position (54a) of said cable guide (54). The second open end (48b) is provided with a closure cap (52).

In the embodiment shown in Figure 9 said device (46) comprising a collecting chamber (58), in which said enclosure (48) is accommodated. The collecting chamber (58) serves for collecting transfer liquid (60) used for passing said cable assembly (1-6) through said cable guide (54).

The cable assembly according to the invention has preferred dimensions allowing a proper and unhampered displacement of the cable assembly through the cable guide is possible even passing sharp bends in the cable guide.

The embodiments of the cable assembly shown in Figures 1-5 are provided with a connector element 16 of 1.25 mm diameter. The cable 6 has a 1.8 mm diameter, whereas the protective element 20 is 13 mm long and has a maximum diameter of 2.2 mm. The complete cable assembly as shown in Figure 2 can be blown through a cable guide 22 with diameter of 4/3 mm having bends of radius down to 5 cm.

However yet another preferred embodiment consists of a cable 6 of 1.8 mm diameter with connector element and a protective element 20 of 20.5 mm long and a maximum diameter of 2.85 mm. This cable assembly can be blown through a 5/3.5 mm cable guide 22.

The embodiment of Figure 7 has a reduced diameter as it uses two protetective elements, that is element 20 placed over the connector element 16 and protective sleeve 20a placed over the rear assembly. The protective sleeve 20b can be made of soft material, e.g. a heat shrinkable plastic tube which can later be removed (cut away) easily. The cable 6 has a diameter of 1.8 mm and protective element 20 is 20.5 mm long and has a maximum diameter of 2.65 mm. The cable assembly can be blown through a 4/3 mm cable guide 22.

This configuration, without the protective sleeve 20b, has been tested by blowing in a 1030 m trajectory with 180° bends with radius of 15 cm placed every 100 m. With a blowing pressure of 10 bar the speed at the end was still 14 m/min, reducing to 13 m/min when the connecting element 16 left the cable guide 22. This indicates that no negative blowing effects (in fact there was a little positive effect) were found when installing with semi-finished connector.

The embodiment of Figure 8 consists of a cable 6 having a 1.8 mm diameter with a protective element 20 of 18.5 mm long and a maximum diameter of 3.25 mm. This embodiment of the cable assembly can be blown through a 5/3.5 mm cable guide, although it is preferable to use a larger cable guide having a diameter of e.g. 7/5.5 mm.

## Claims

1. Method for installing a cable assembly (1) for communication purposes, said cable assembly comprising a communication cable (6) having a first free, front end (4) and wherein the cable Is built up of at least an optical fibre (12), which is coaxially surrounded by at least one cable sheath (6a), said method comprising the steps of:
i) providing a cable guide (22) having a starting point and an end, open point located at an end users home;
ii) guiding said cable assembly with the optical fibre being exposed at the free, front end of the cable, at which free, front end the fibre Is fixedly surrounded by a connecting element (16) having at least one recess (18) in its circumferential surface, from said starting point towards said end point using a transfer medium;
iii) collecting the free, front end of the cable assembly (1) at the end point;
iv) final assembly of a communication connector (2) containing the connection element (16) at the free, front end of the cable assembly (1) once the cable assembly has been passed through the cable guide (22).

2. Method according to claim 1, **characterised in that** step iii) comprises further the step of
v) collecting the transfer fluid at the end point during the guiding of the cable assembly through the cable guide (22) according to step ii).

3. Method according to claim 1 or 2, **characterised in that** step ii) is preceded by the step of
vi) providing a removable protective element (20) round the free end of the communication cable prior to step ii).

4. Method according to claim 3, **characterised in that** step iii) is preceded by the step of
vii) providing a spring element (14) round the optical fibre between the connecting element (16) and the cable sheath(s) (6a).

5. Device (46) for collecting the front end of a cable assembly (1) for communication purposes, which cable assembly (1) comprises a communication cable (6) having a first free, front end (4) and which cable (6) is be passed with its front end through a cable guide (22; 54) from a starting position to an end position (54a) using the method according to claim 1 to 4, **characterized in that** said device comprises an enclosure (48) to be positioned around said end position of said cable guide (22; 54), said enclosure being provided with one or more ventilation openings (50).

6. Device according to claim 6, **characterised in that** said enclosure is configured as a tube-shaped element having a first (48a) and a second (48b) open end, wherein said first open end (48a) is provided with connecting means (66) for coupling with the end position of said cable guide,

7. Device according to claim 6, **characterised in that** said second open end (48b) is provided with a closure cap (62).

8. Device according to anyone of the claims 5-7, **characterised in that** said device comprising a collecting chamber (58) accommodating said enclosure (48), said collecting chamber serving for collecting transfer liquid (60) used for passing said cable assembly (1) through said cable guide (22; 54).

## Patentansprüche

1. Verfahren zur Installation einer Kabelbaugruppe (1) für Kommunikationszwecke, wobei die Kabelbaugruppe ein Kommunikationskabel (6) umfasst, das ein erstes freies Frontende (4) aufweist, und wobei das Kabel aus wenigstens einem Lichtwellenleiter (12) aufgebaut ist, der koaxial von wenigstens einem Kabelmantel (6a) umgeben ist, mit den folgenden Schritten:
i) Bereitstellen einer Kabelführung (22) mit einem Anfangspunkt und einem offenen Endpunkt, der sich zuhause beim Endbenutzer befindet;
ii) Leiten der Kabelbaugruppe von dem Anfangspunkt hin zum Endpunkt unter Verwendung eines Transfermediums, wobei der Lichtwellenleiter am freien Frontende des Kabels freiliegt, an welchem freien Frontende der Lichtwellenleiter starr von einem Verbindungselement (16) umgeben ist, das wenigstens eine Ausnehmung (18) in seiner Umfangsfläche aufweist;
iii) Aufnehmen des freien Frontendes der Kabelbaugruppe (1) am Endpunkt;
iv) Endmontage eines Kommunikationsanschlusses (2), der das Verbindungselement (16) am freien Frontende der Kabelbaugruppe (1) umfasst, nachdem die Kabelbaugruppe durch die Kabelführung (22) geführt wurde.

2. Verfahren nach Anspruch 1, **dadurch gekennzeichnet, dass** der Schritt iii) ferner den folgenden Schritt umfasst:
v) Sammeln des Transferfluids am Endpunkt, während des Leitens der Kabelbaugruppe durch die Kabelführung (22) gemäß Schritt ii).

3. Verfahren nach Anspruch 1 oder 2, **dadurch gekennzeichnet, dass** dem Schritt ii) folgender Schritt vorausgeht:
vi) Bereitstellen eines entfernbaren Schutzelements (20) um das freie Ende des Kommunikationskabels herum vor dem Schritt ii).

4. Verfahren nach Anspruch 3, **dadurch gekennzeichnet, dass** dem Schritt iii) folgender Schritt vorausgeht:
vii) Bereitstellen eines Federelements (14) um den Lichtwellenleiter herum, zwischen dem Verbindungselement (16) und dem wenigstens einen Kabelmantel (6a).

5. Vorrichtung (46) zum Aufnehmen des Frontendes einer Kabelbaugruppe (1) für Kommunikationszwecke, wobei die Kabelbaugruppe (1) ein Kommunikationskabel (6) mit einem ersten freien Frontende (4) umfasst, und wobei das Kabel (6) dafür vorgesehen ist, mit seinem Frontende durch eine Kabelführung (22, 54) von einer Anfangsposition zu einer Endposition (54a) unter Verwendung des Verfahrens nach einem der Ansprüche 1 bis 4 geführt zu werden, **dadurch gekennzeichnet, dass** die Vorrichtung eine Hülle (48) umfasst, die dazu vorgesehen ist, um die Endposition der Kabelführung (22, 54) herum angeordnet zu werden, wobei die Hülle mit einen oder mehreren Lüftungsöffnungen (50) versehen ist.

6. Vorrichtung nach Anspruch 5, **dadurch gekennzeichnet, dass** die Hülle als ein röhrenförmiges Element mit einem ersten und einem zweiten offenen Ende (48a, 48b) ausgebildet ist, wobei das erste offene Ende (48a) mit Verbindungsmitteln (56) versehen ist, um mit der Endposition der Kabelführung zu koppeln.

7. Vorrichtung nach Anspruch 6, **dadurch gekennzeichnet, dass** das zweite offene Ende (48b) mit einer Verschlusskappe (52) versehen ist.

8. Vorrichtung nach einem der Ansprüche 5 bis 7, **dadurch gekennzeichnet, dass** die Vorrichtung einen die Hülle (48) beherbergenden Sammelraum (58) umfasst, der zum Sammeln des Transferfluids (60) dient, das für das Durchführen der Kabelbaugruppe (1) durch die Kabelführung (22, 54) verwendet wird.

## Revendications

1. Procédé d'installation d'un ensemble de câble (1) à des fins de communication, ledit ensemble de câble comprenant un câble de communication (6) ayant une première extrémité avant libre (4) et où le câble est construit d'au moins une fibre optique (12), qui est entourée de manière coaxiale d'au moins une gaine de câble (6a), ledit procédé comprenant les étapes qui consistent :
i) à fournir un guide-câble (22) ayant un point de départ et un point d'extrémité ouvert situé au niveau d'un domicile d'utilisateur final ;
ii) à guider ledit ensemble de câble avec la fibre optique exposée à l'extrémité avant libre du câble, au niveau de laquelle extrémité avant libre la fibre est solidement entourée d'un élément de raccordement (16) ayant au moins un évidement (18) dans sa surface circonférentielle, à partir dudit point de départ vers ledit point d'extrémité en utilisant un milieu de transfert ;
iii) à collecter l'extrémité avant libre de l'ensemble de câble (1) au point d'extrémité ;
iv) à effectuer un assemblage final d'un connecteur de communication (2) contenant l'élément de raccordement (16) au niveau de l'extrémité avant libre de l'ensemble de câble (1) une fois que l'ensemble de câble a traversé le guide-câble (22).

2. Procédé selon la revendication 1, **caractérisé en ce que** l'étape iii) comprend en outre l'étape qui consiste :
v) à collecter le fluide de transfert au point d'extrémité pendant le guidage de l'ensemble de câble à travers le guide-câble (22) selon l'étape ii).

3. Procédé selon la revendication 1 ou 2, **caractérisé en ce que** l'étape ii) est précédée par l'étape qui consiste :
vi) à fournir un élément de protection amovible (20) autour de l'extrémité libre du câble de communication avant l'étape ii).

4. Procédé selon la revendication 3, **caractérisé en ce que** l'étape iii) est précédée par l'étape qui consiste :
vii) à fournir un élément ressort (14) autour de la fibre optique entre l'élément de raccordement (16) et la/les gaine(s) de câble (6a).

5. Dispositif (46) pour collecter l'extrémité avant d'un ensemble de câble (1) à des fins de communication, lequel ensemble de câble (1) comprend un câble de communication (6) ayant une première extrémité avant libre (4) et lequel câble (6) doit traverser avec son extrémité avant un guide-câble (22 ; 54) à partir d'une position de départ jusqu'à une position d'extrémité (54a) en utilisant le procédé selon les revendications 1 à 4, **caractérisé en ce que** ledit dispositif comprend une enveloppe (48) devant être positionnée autour de ladite position d'extrémité dudit guide-câble (22 ; 54), ladite enveloppe étant dotée d'une ou de plusieurs ouverture(s) de ventilation (50).

6. Dispositif selon la revendication 5, **caractérisé en ce que** ladite enveloppe est configurée sous forme d'un élément tubulaire ayant des première (48a) et deuxième (48b) extrémités ouvertes, où ladite première extrémité ouverte (48a) est dotée de moyens de raccordement (56) pour un couplage avec la position d'extrémité dudit guide-câble.

7. Dispositif selon la revendication 6, **caractérisé en ce que** ladite deuxième extrémité ouverte (48b) est dotée d'un capuchon d'enveloppe (52).

8. Dispositif selon l'une quelconque des revendications 5 à 7, **caractérisé en ce que** ledit dispositif comprenant une chambre de collecte (58) recevant ladite enveloppe (48), ladite chambre de collecte servant à collecter le liquide de transfert (60) utilisé pour faire passer ledit ensemble de câble (1) à travers ledit guide-câble (22 ; 54).
